# EUROPÄISCHE PATENTSCHRIFT

(11) **EP 1 901 411 B1**
(45) Veröffentlichungstag und Bekanntmachung des Hinweises auf die Patenterteilung: **16.09.2015**
(21) Anmeldenummer: 07114997.5
(22) Anmeldetag: 27.08.2007
(51) Int. Cl.: H02J 7/00, H02P 7/29

(54) **Verfahren zur Steuerung eines Motors eines akkubetriebenen Werkzeuggerätes**
Method for actuating the motor of a battery driven tool
Procédé destiné à la commande d'un moteur d'un outil à pile

(30) Priorität: 04.09.2006 DE 102006000439
(43) Veröffentlichungstag der Anmeldung: 19.03.2008
(73) Patentinhaber: HILTI Aktiengesellschaft, 9494 Schaan (LI)
(72) Erfinder: Müller, Thomas, 86863 Unterrothan (DE); Meiendres, Germar, 86875 Waal (DE); Baxivanelis, Konstantin, 86916 Kaufering (DE); Stempfhuber, Johannes, 86899 Landsberg (DE)
(74) Vertreter: Hilti Aktiengesellschaft Corporate Intellectual Property

(56) Entgegenhaltungen:
- WO-A1-03/007467
- US-A1- 2004 179 829

## Beschreibung

Die Erfindung betrifft ein Verfahren zur Steuerung eines Motors eines akkubetriebenen Werkzeuggerätes, wie einer handgeführten Kreissäge, nach dem Oberbegriff von Patentanspruch 1, und eine Steuereinrichtung zur Durchführung des Verfahrens gemäß dem Oberbegriff des nebengeordneten Patentanspruchs.

In einer Ein-Position eines Motorschalters, in der dieser manuell vom Anwender betätigt ist, treibt der Motor ein Werkzeug des Werkzeuggerätes an. Bei Akkugeräten wird in der Regel mit dem Motorschalter auch die gesamte Elektronik vom Akku getrennt, um eine Entladung des Akkus bei Nichtgebrauch zu verhindern. Ferner ist das Verfahren zur Steuerung des Motors des Werkzeuggerätes in der Regel so ausgelegt, das die Steuerelektronik das Werkzeuggerät bzw. den Motor bei Unterschreitung einer gewissen Versorgungsspannung abschaltet, um eine Beschädigung des Motors bzw. der elektrischen Bauteile zu verhindern. Die Unterspannungsabschaltung erfolgt dabei z. B. dann, wenn der Akku entladen oder defekt ist.

Eine derartige Unterspannungsabschaltung ist z. B. aus der DE 36 11 884 A1 bei einem akkubetriebenen Handwerkzeug bekannt. Zur Durchführung des Steuerungsverfahrens ist dort ein über eine Flipflop-Schaltung gesteuertes Abschaltrelais vorgesehen, wobei die Flipflop-Schaltung von einem Unterspannungswächter steuerbar ist. Das Abschaltrelais kann über einen Hauptschalter an Spannung gelegt werden, um das Handwerkzeug in Betrieb zu setzen. Das Abschaltrelais weist einen Wechselschalter auf, der bei einem Abfall des Abschaltrelais den Motor kurzschließt, so dass er abgebremst wird, wenn der Hauptschalter wieder gelöst wird oder wenn der Unterspannungswächter über die Flipflop-Schaltung eine Unterspannungsabschaltung hervorruft.

Darüber hinaus ist in der WO 03/007467 ein Verfahren offenbart zur Steuerung eines Motors, der in einer Ein-Position eines Motorschalters ein Werkzeug eines akkubetriebenen Werkzeuggerätes antreibt. Hierzu sendet der Motorschalter ein PWM-Signal von dem Akkumulator zu dem Motor. Eine Steuerungseinheit überwacht dabei wenigstens einen elektrischen Wert von dem Akkumulator, von dem Motor sowie von dem Motorschalter und stellt dann den Tastgrad (Duty Cycle) für das PWM-Signal auf Basis dieses elektrischen Werts ein.

Des Weiteren offenbart die US 2004/179829 ein Verfahren zur Steuerung eines Motors, der in einer Ein-Position eines Motorschalters ein Werkzeug eines akkubetriebenen Werkzeuggerätes antreibt, wobei der Schalter den Motor einschaltet und eine Elektronikeinrichtung einer Steuereinrichtung mit Strom versorgt. Durch das Einschalten wird der Mikroprozessor initialisiert und führt danach fortlaufend und abwechselnd eine Überwachung eines Motorstroms aus, wobei die Akkuspannung fortlaufend mit einem, in einem Speicher der Elektronikeinrichtung hinterlegten Grenzwert verglichen wird.

Von Nachteil hierbei ist, dass eine Unterscheidung einer Abschaltung durch eine Betätigung des Motorschalters von einer Abschaltung durch eine mangelnde Stromversorgung, z. B. bei leerem oder defektem Akku, hier nicht möglich ist. Ferner ist ein Wiedereinschalten des Werkzeuggerätes unmittelbar nach dem Ausschaltendes Schalters nicht möglich, wenn die Steuerelektronik einen Mikrokontroller aufweist, wie bei modernen Werkzeuggeräten üblich, da zwar die Schwelle zur Unterspannungsabschaltung unterschritten wurde, die Schwelle zur Neuinitialisierung der Steuerelektronik und des Mikrokontrollers aber noch nicht unterschritten wurde. Dies ist insbesondere dann der Fall, wenn die Unterspannnungsabschaltung sehr schnell reagiert, d. h. nur ein kurzes Zeitfenster bis zur Reaktion (Abschaltung) besitzt. Das Zeitfenster bis zu einem möglichen Wiedereinschalten des Werkzeuggerätes über den Motorschalter kann je nach Ausführung und Aufbau der Elektronik bis zu mehrere Sekunden dauern, was vom Anwender als störend empfunden wird. Verschiedene Steueroptionen sind nicht möglich.

Der vorliegenden Erfindung liegt die Aufgabe zugrunde, ein Steuerverfahren bereit zu stellen, das die genannten Nachteile vermeidet und insbesondere den Vorteil hat, dass bei einer erneuten Betätigung des Motorschalters das Einschalten des Motors ohne Zeitverlust erfolgen kann, da die Elektronikeinrichtung nicht erst initialisiert zu werden braucht. Hierdurch wird ein Wiederanlauf des Motors des Werkzeuggerätes bei unmittelbarem Wiedereinschalten nach einem Ausschalten des Motorschalters ermöglicht.

Hierzu wird ein Steuerverfahren eines akkubetriebenen Werkzeuggeräts bereitgestellt zur Steuerung eines Motors, der in einer Ein-Position eines Motorschalters ein Werkzeug antreibt, wobei in einem ersten Schritt eine Elektronikeinrichtung einer Steuereinrichtung initialisiert und der Motor eingeschaltet wird, und in einem zweiten Schritt eine fortlaufende Überwachung eines Motorstroms und einer Akkuspannung erfolgt und in einem dritten Schritt, der sich mit dem zweiten Schritt abwechselt, ein fortlaufender Vergleich der Akkuspannung mit einem, in einem Speicher der Elektronikeinrichtung hinterlegten Grenzwert erfolgt.

Erfindungsgemäß erfolgt in einem weiteren Schritt, der einem Erkennen einer Aus-Position des Motorschalters durch die Elektronikeinrichtung folgt, eine fortlaufende Überwachung der Akkuspannung für einen Zeitraum.

Vorteilhaft liegt der Grenzwert für die Akkuspannung in einem Bereich von 5 V bis zu 70 % der Nennspannung des verwendbaren Akkus, wodurch eine sichere Ansteuerung der Leistungshalbleiter, bzw. des Leistungsschalters, wie z.B. eines MOSFET, gewährleistet ist. Bei einer Nennspannung eines in einem Werkzeuggerät verwendbaren Akkus von 24 V liegt der Grenzwert dabei also zwischen 5 V und 16,8 V.

Zudem wird die Aufgabe durch ein Werkzeuggerät mit einer Steuereinrichtung zur Durchführung des Verfahrens in einer der oben genannten Ausgestaltungen gelöst. Vorteilhaft wird dabei wenigstens der zweite, der dritte und der weitere Schritt des Verfahrens in einem zur Elektronikeinrichtung gehörenden Mikrokontroller durchgeführt.

Die Erfindung wird nachstehend anhand eines Ausführungsbeispiels näher erläutert.

Es zeigen
- Fig. 1: einen Aufbau einer Steuereinrichtung eines Werkzeuggerätes zur Durchführung eines erfindungsgemäßen Steuerungsverfahrens für einen zum Antrieb eines Werkzeuges vorgesehenen Motor,
- Fig. 2: ein erfindungsgemäßes Steuerverfahren im Flussdiagramm,
- Fig. 3: einen beispielhaften Verlauf eines Motorstromes und einer Akkuspannung bei einer Unterspannungsabschaltung des Werkzeuggerätes bei Anwendung des erfindungsgemäßen Steuerungsverfahrens,
- Fig. 4: einen beispielhaften Verlauf des Motorstromes und der Akkuspannung bei einer Abschaltung des Werkzeuggerätes mit Wiederanlauf des Motors bei Anwendung des erfindungsgemäßen Steuerungsverfahrens,
- Fig. 5: einen beispielhaften Verlauf des Motorstromes der Akkuspannung bei einer Abschaltung des Werkzeuggerätes ohne Wiederanlauf des Motors bei Anwendung des erfindungsgemäßen Steuerungsverfahrens.

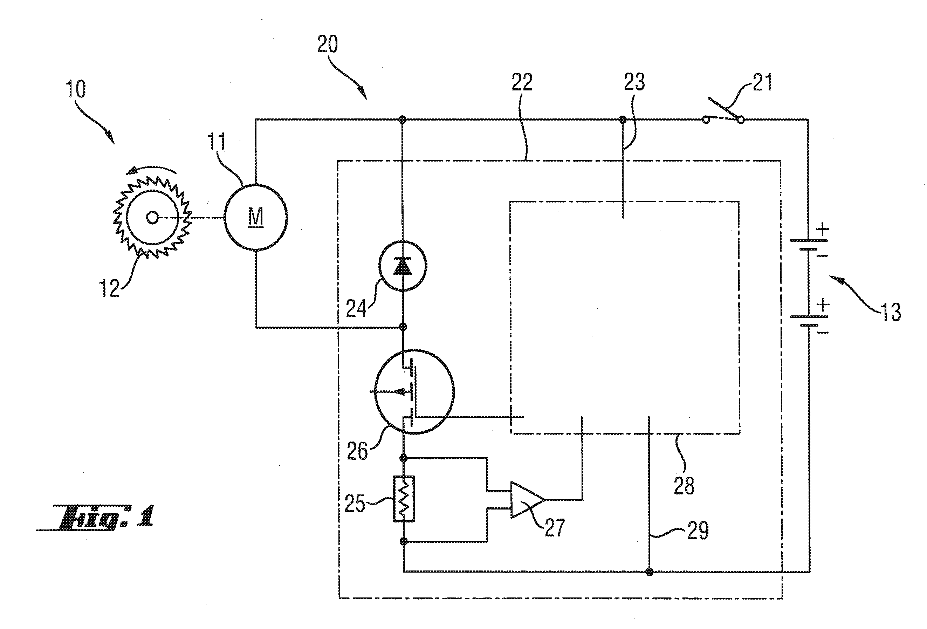

Fig. 1 zeigt die Steuereinrichtung 20 eines nichtdetailliert dargestellten Werkzeuggerätes 10 in Form einer Handkreissäge mit einem Motor 11, über den ein scheibenförmiges Werkzeug 12 in Form eines Sägeblattes mit einer Nennleistung antreibbar ist. Der Motor 11 ist mittels eines Motorschalters 21 der Steuereinrichtung 20 ein- und ausschaltbar. Der Motorschalter 21 ist hierzu zwischeneiner dargestellten Aus-Position und einer strichpunktiert dargestellten Ein-Position verstellbar. In der Ein-Position wird dabei eine von einem Akku 13 erzeugte Akkuspannung an dem Motor 11 und der Steuereinrichtung 20 angelegt.

Die Steuereinrichtung 20 weist eine Elektronikeinrichtung 22 auf, die eine Schutzdiode 24, einen Shunt in Form eines niedrigohmigen Widerstandes 25, einen elektronischen Leistungsschalter 26, einen Operationsverstärker 27 und eine Steuerungseinheit 28 umfasst. Die Steuerungseinheit 28 weist dabei ferner einen in der Figur nicht dargestellten Mikrokontroller auf.

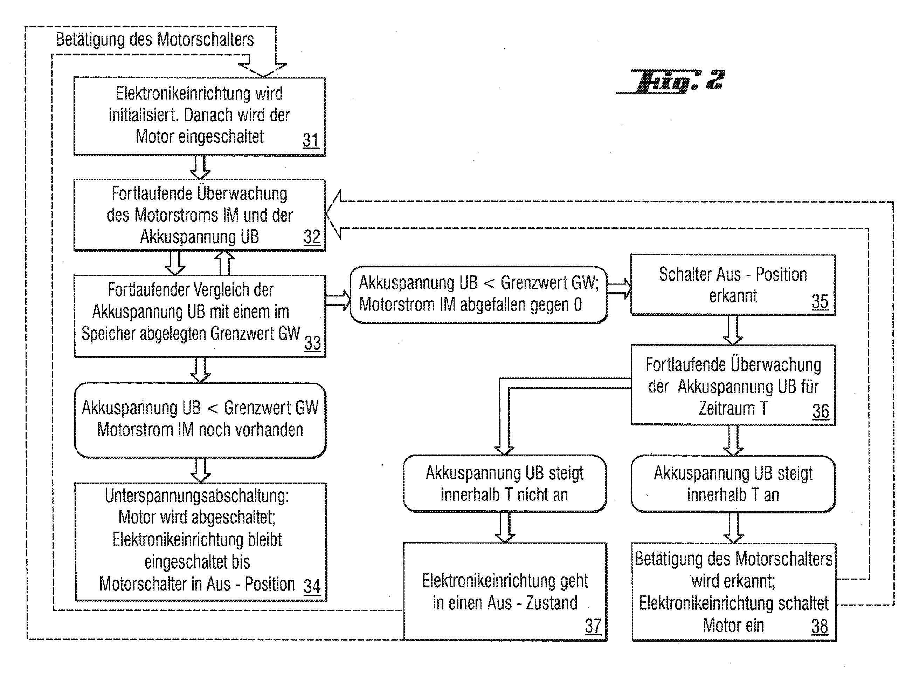

Durch den Widerstand 25 und den Operationsverstärker 27 der Elektronikeinrichtung 22 wird ein im Betrieb am Motor 11 auftretender Motorstrom IM (vgl. Fig. 2 bis 5) permanent ermittelt und über die Steuerungseinheit 28 mit dem Mikrokontroller ausgewertet. Über den Pfad 23 wird die Akkuspannung UB (vgl. Fig. 2 bis 5) ermittelt und über die Steuerungseinheit 28 mit dem Mikrokontroller ausgewertet. Über die Leitung 29 ist die Steuerungseinheit 28 mit Masse verbunden.

Das erfindungsgemäße Steuerungsverfahren ist in dem Flussdiagramm in Fig. 2 wiedergegeben. Demnach wird bei einer Betätigung des Motorschalters 21 in einem ersten Schritt 31 zunächst die Steuerungseinheit 28 mit dem Mikroprozessor initialisiert und danach der Motor 11 eingeschaltet. Danach erfolgt in einem fortlaufend wiederholten zweiten Schritt 32 eine Überwachung des Motorstroms IM und der Akkuspannung UB. Die Akkuspannung UB wird dabei in einem ebenfalls fortlaufend wiederholten dritten Schritt 33 mit einem, in einem Speicher der Steuerungseinheit 28 abgelegten Grenzwert GW verglichen. Der Grenzwert GW liegt dabei in einem Bereich von 5 V bis zu 70 % der Nennspannung des verwendbaren Akkus. Fällt die Akkuspannung UB unter den Grenzwert GW ab, wobei der Motorstrom IM nicht gegen Null abfällt, dann wird von der Steuerungseinrichtung 28 erkannt, dass nicht der Motorschalter 21 in eine Aus-Position (durchgezogene Linie in 1) überführt wurde, sondern dass der Akku 13 defekt oder entladen ist. Von der Steuerungseinrichtung 28 wird dann in einem vierten Schritt 34 eine Unterspannungsabschaltung des Motors 11 vorgenommen, wobei die Elektrönikeinrichtung 22 noch bis zu einem manuellen überführen des Motorschalters 11 in die Aus-Position eingeschaltet bleibt. Die Abschaltung wird dabei z.B. durch den elektronischen Leistungsschalter 26 vorgenommen, der z.B. als MOSFET ausgebildet ist.

Wird bei den fortlaufend durchgeführten zweiten und dritten Schritten 32, 33 ermittelt, dass die Akkuspannung UB unter den Grenzwert GW abfällt, wobei der Motorstrom IM gegen Null abfällt, dann wird von der Steuerungseinrichtung 28 in einem fünften Schritt 35 erkannt, dass der Motorschalter 21 in eine Aus-Position (durchgezogene Linie in 1) überführt wurde. Danach wird in einem sechsten Schritt 36 die Akkuspannung UB während eines Zeitraums T, der z. B. 2 bis 5 Sekunden beträgt, überwacht. Steigt die Akkuspannung UB innerhalb des Zeitraumes T nicht wieder durch eine erneute Betätigung des Motorschalters 21 an, dann wird die Elektronikeinrichtung 22 in einem siebten Schritt 37 in einen Aus-Zustand versetzt. Bei einer erneuten Betätigung wird dann zunächst wieder in einem ersten Schritt 31 die Elektronikeinrichtung 22 initialisiert und danach der Motor 11 eingeschaltet.

Steigt die Akkuspannung UB innerhalb des Zeitraumes T wieder an, dann wird eine erneute Betätigung des Motorschalters 21 erkannt und in einem achten Schritt 38 wird der Motor 11 über die Elektronikeinrichtung 22 wieder eingeschaltet. Das Steuerverfahren springt dann direkt zum zweiten Schritt 32 und zum dritten Schritt 33, der fortlaufenden Überwachung der Akkuspannung UB und des Motorstroms IM sowie dem fortlaufenden Vergleich der Akkuspannung UB mit dem Grenzwert GW.

Die Stromversorgung der Steuerungseinrichtung 28 während des Zeitraums T kann z.B. Über Kondensatoren erfolgen, die in der Steuerungseinrichtung 28 vorhanden sind oder über den sich noch in Drehung befindlichen Motor 11, der durch die aus der Drehung induzierte Spannung die Steuerungseinheit 28 für den Betrieb des Mikrokontrollers ausreichend mit Energie versorgt. Die Länge des Zeitraums T ist dabei vorzugsweise durch die Zeit während der noch ein Strom zur Versorgung der Steuerungseinheit zur Verfügung steht definiert, sie kann aber auch durch den Mikrokontroller definiert sein.

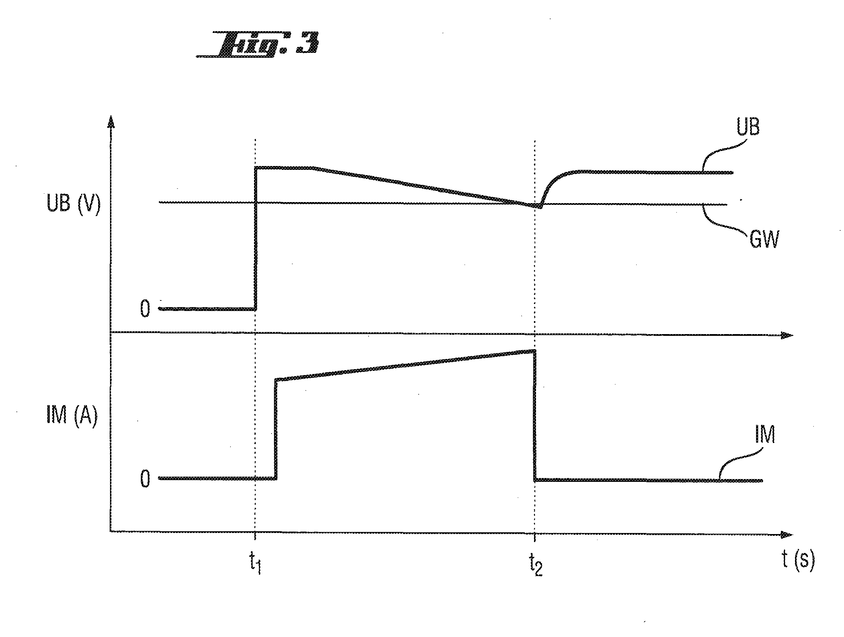

In den Fig. 3 bis 5 sind die Strom- und Spannungsverläufe zu verschiedenen Betriebssituationen wiedergegeben anhand derer das erfindungsgemäße Steuerverfahren nähererläutert wird. Auf den Ordinaten der Diagramme ist dabei jeweils die gemessene Akkuspannung UB in Volt (V) bzw. der gemessene Motorstrom IM in Ampere (A) aufgetragen. Auf den Abszissen ist hingegen die Zeit t in Sekunden aufgetragen.

In Fig. 3 ist der Verlauf des Motorstroms IM und der Akkuspannung UB für den Fall dargestellt, dass der Akku entleert oder defekt ist. Zu einem ersten Zeitpunkt t1 wird vom Anwender der Motorschalter betätigt und in die aus 1 ersichtliche Ein-Position überführt. Die Akkuspannung UB steigt sofort an, während der Motorstrom IM zeitversetzt ansteigt, da die Elektronikeinrichtung 22 zunächst im ersten Schritt 31 des Steuerungsverfahrens initialisiert werden musste. Vom Zeitpunkt t1 an laufen die zweiten und dritten Schritte 32 und 33 des Steuerungsverfahrens ab, die fortlaufende Überwachung der Akkuspannung UB und des Motorstroms IM sowie der fortlaufende Vergleich der Akkuspannung UB mit dem Grenzwert GW. Im zweiten Zeitpunkt t2 ist die Akkuspannung UB bis unter den Grenzwert GW abgesunken, während der Motorstrom IM zu diesem zweiten Zeitpunkt t2 noch vorhanden ist. Die Steuerungseinheit 28 erkennt eine Entladung bzw. einen Defekt des Akkus 13 und leitet in einem vierten Schritt 34 die Unterspannungsabschaltung ein, bei der der Motor 11 abgeschaltet wird. Die Elektronikeinrichtung 22 bleibt jedoch noch bis zum manuellen überführen des Motorschalters 11 in die Aus-Position eingeschaltet. Nach dem Abschalten des Motors 11 steigt die Akkuspannung UB daher wieder über den Grenzwert GW an.

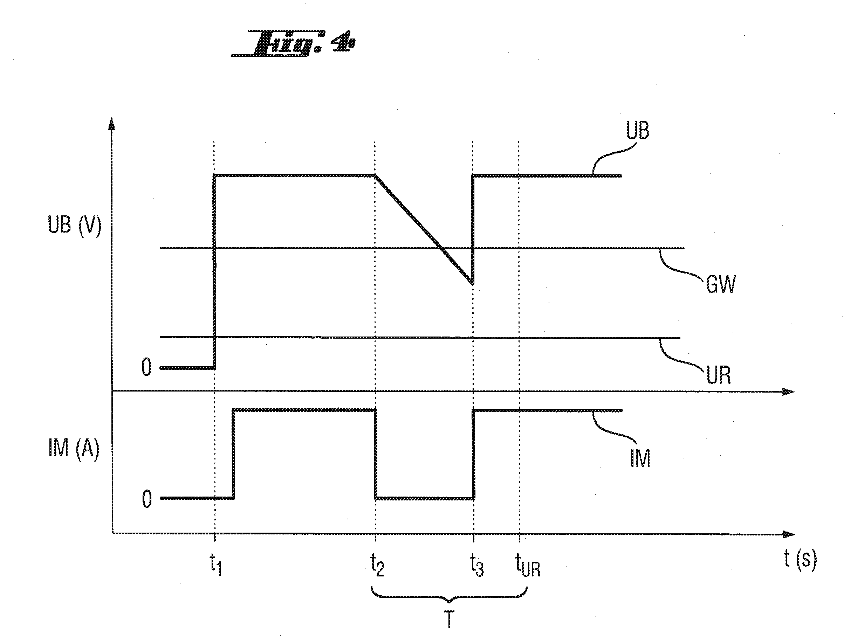

In Fig. 4 ist der Verlauf des Motorstroms IM und der Akkuspannung UB für den Fall dargestellt, dass das Werkzeuggerät 10 über den Motorschalter 21 ausgeschaltet wird und innerhalb des Zeitraums T wieder eingeschaltet wird. Im ersten Zeitpunkt t1 wird vom Anwender der Motorschalter betätigt und in die aus Fig. 1 ersichtliche Ein-Position überführt, wobei die Schritte 31, 32 und 33 des Steuerungsverfahrens wie vorhergehend beschrieben ablaufen. Zum zweiten Zeitpunkt t2 wird nun der Motorschalter 21 vom Anwender in die Aus-Position (siehe Fig. 1) überführt. Die Akkuspannung UB sinkt langsam ab, während der Motorstrom IM nahezu direkt auf Null zurückgeht. Die Steuerungseinheit 28 erkennt in einem fünften Verfahrensschritt 35, dass der Motorschalter 21 in die Aus-Position überführt wurde und überwacht nun im sechsten Schritt 36 fortlaufend die Akkuspannung UB während des Zeitraums T. Zum dritten Zeitpunkt t3 steigt die Akkuspannung UB noch innerhalb des Zeitraums T wieder sprunghaft an. In einem achten Schritt 38 wird nun der Motor 11 über die Elektronikeinrichtung 22 wieder eingeschaltet. Das Steuerverfahren springt, wie bereits beschrieben, nachfolgend direkt zum zweiten Schritt 32 und zum dritten Schritt 33, der fortlaufenden Überwachung der Akkuspannung UB und des Motorstroms IM sowie dem fortlaufenden Vergleich der Akkuspannung UB mit dem Grenzwert GW.

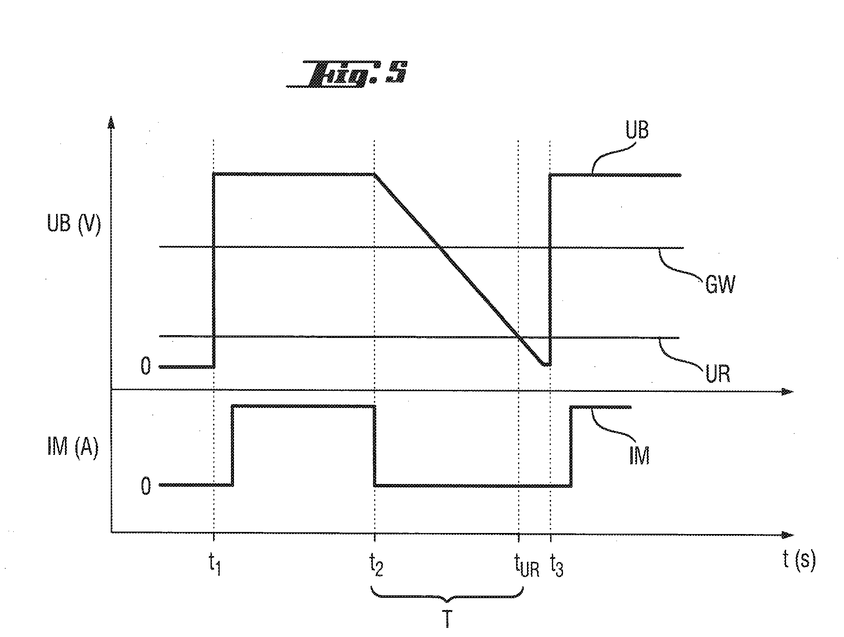

Die in Fig. 5 wiedergegebenen Verläufe des Motorstroms IM und der Akkuspannung UB unterscheiden sich nur dadurch von dem in Fig. 4 dargestellten, dass das Werkzeuggerät 10 innerhalb des Zeitraums T nicht wieder eingeschaltet wird, sondern erst nach Ablauf dieses Zeitraums T. Nach dem Überführen des Motorschalters 21 in die Aus-Position zum zweiten Zeitpunkt t2 sinkt die Akkuspannung UB kontinuierlich gegen Null ab. Zum Zeitpunkt tUR unterschreitet die Akkuspannung UB den Grenzwert UR. Dieser Zeitpunkt tUR definiert dabei das Ende des Zeitraums T. Im Zeitpunkt tUR erfolgt demnach der siebte Schritt 37 des Steuerungsverfahrens. Die Elektronikeinrichtung 22 geht in einen Aus-Zustand, so dass eine erneute Initialisierung der Elektronikeinrichtung 22 vor dem Anfahren des Motors 11 notwendig ist. Zum dritten Zeitpunkt t3 wird der Motorschalter 21 erneut betätigt und in die Ein-Position überführt. Die Akkuspannung UB steigt sofort an, während der Motorstrom IM zeitversetzt ansteigt, da die Elektronikeinrichtung 22 zunächst im ersten Schritt 31 des Steuerungsverfahrens initialisiert werden musste. Vom dritten Zeitraum t3 an laufen die zweiten und dritten Schritte 32 und 33 des Steuerungsverfahrens ab, die fortlaufende Überwachung der Akkuspannung UB und des Motorstroms IM sowie der fortlaufende Vergleich der Akkuspannung UB mit dem Grenzwert GW.

Anstelle das Ende des Zeitraums T bzw. dessen Länge über den Grenzwert UR zu definieren, könnte der Zeitraum T auch durch im Speicher des Mikrokontrolers bzw. der Steuerungseinheit 28 hinterlegt sein und die Überführung der Elektronikeinrichtung 22 in den Aus-Zustand im siebten Schritt 37 über den Mikrokontroller erfolgen.

## Patentansprüche

1. Steuerverfahren eines akkubetriebenen Werkzeuggeräts (10) zur Steuerung eines Motors (11), der in einer Ein-Position eines Motorschalters (21) ein Werkzeug (12) antreibt, wobei in einem ersten Schritt (31) eine Elektronikeinrichtung (22) einer Steuereinrichtung (20) initialisiert und der Motor (11) eingeschaltet wird, und in einem zweiten Schritt (32) eine fortlaufende Überwachung eines Motorstroms (IM) und einer Akkuspannung (UB) erfolgt und in einem dritten Schritt (33), der sich mit dem zweiten Schritt (32) abwechselt, ein fortlaufender Vergleich der Akkuspannung (UB) mit einem, in einem Speicher der Elektronikeinrichtung (22) hinterlegten Grenzwert (GW) erfolgt, **dadurch gekennzeichnet, dass** in einem weiteren Schritt (36), der einem Erkennen einer Aus-Position des Motorschalters (21) durch die Elektronikeinrichtung (22) folgt, eine fortlaufende Überwachung der Akkuspannung (UB) für einen Zeitraum (T) erfolgt.

2. Steuerverfahren nach Anspruch 1,
**dadurch gekennzeichnet, dass** der Grenzwert (GW) in einem Bereich von 5 V bis zu 70 % der Nennspannung des verwendbaren Akkus (13) liegt.

3. Akkubetriebenes Werkzeuggerät mit einer Steuereinrichtung (20) mit Elektronikeinrichtung (22) zur Durchführung des Verfahrens nach einem der Ansprüche 1 bis 2.

4. Akkubetriebenes Werkzeuggerät nach Anspruch 3,
**dadurch gekennzeichnet, dass** wenigstens der zweite, der dritte und der weitere Schritt (32, 33, 36) des Verfahrens in einem zur Elektronikeinrichtung (22) gehörenden Mikrokontroller durchgeführt werden.

## Claims

1. Control method of a battery-driven power tool (10) for controlling a motor (11) which drives a tool (12) in an ON position of a motor switch (21), wherein, in a first step (31), an electronic device (22) of a control system (20) is initialised and the motor (11) is switched on and, in a second step (32), a continuous monitoring of a motor current (IM) and of a battery voltage (UB) takes place and, in a third step (33) which alternates with the second step (32), a continuous comparison of the battery voltage (UB) with a limit value (GW) stored in a memory of the electronic device (22) takes place,
**characterised in that,** in a further step (36) which follows a detection of an OFF position of the motor switch (21) by the electronic device (22), a continuous monitoring of the battery voltage (UB) takes place for a time period (T).

2. Control method according to Claim 1,
**characterised in that** the limit value (GW) lies within a range from 5 V to 70% of the rated voltage of the applicable battery (13).

3. Battery-driven power tool having a control system (20) with electronic device (22) for carrying out the method according to either of Claims 1 and 2.

4. Battery-driven power tool according to Claim 3,
**characterised in that** at least the second, the third and the further step (32, 33, 36) of the method are carried out in a microcontroller forming part of the electronic device (22).

## Revendications

1. Procédé de commande d'un appareil d'outillage à accumulateur (10) pour commander un moteur (11) qui entraîne un outil (12) dans une position de marche d'un commutateur de moteur (21), dans lequel, dans une première étape (31), un dispositif électronique (22) d'un dispositif de commande (20) est initialisé et le moteur (11) est mis en marche, et, dans une deuxième étape (32), une surveillance continue d'une intensité de moteur (IM) et d'une tension d'accumulateur (UB) est réalisée, et, dans une troisième étape (33), qui alterne avec la deuxième étape (32), une comparaison continue de la tension d'accumulateur (UB) avec une valeur limite (GW) stockée dans une mémoire du dispositif électronique (22) est réalisée,
**caractérisé en ce que** dans une étape supplémentaire (36) qui suit une détection d'une position d'arrêt du commutateur de moteur (21) par le dispositif électronique (22), une surveillance continue de la tension d'accumulateur (UB) est réalisée pendant une période de temps (T).

2. Procédé de commande selon la revendication 1, **caractérisé en ce que** la valeur limite (GW) est comprise dans une plage de 5 V à 70 % de la tension nominale de l'accumulateur utilisable (13).

3. Appareil d'outillage à accumulateur comportant un dispositif de commande (20) avec un dispositif électronique (22) pour mettre en oeuvre le procédé selon l'une des revendications 1 à 2.

4. Appareil d'outillage à accumulateur selon la revendication 3, **caractérisé en ce qu'**au moins la deuxième étape, la troisième étape et l'étape supplémentaire (32, 33, 36) du procédé sont mises en oeuvre dans un microcontrôleur appartenant au dispositif électronique (22).
